# EUROPEAN PATENT APPLICATION

(11) **EP 3 122 137 A1**
(43) Date of publication of application: **25.01.2017**
(21) Application number: 14886305.3
(22) Date of filing: 19.05.2014
(51) Int. Cl.: H04W 72/12

(54) **METHOD FOR CONTROLLING CAPABILITY OF TERMINAL, TERMINAL, EVOLVED NODE B AND COMPUTER STORAGE MEDIUM**

(30) Priority: 21.03.2014 CN 201410109943
(71) Applicant: ZTE Corporation, Guangdong 518057 (CN)
(72) Inventor: CHEN, Zhongming, Shenzhen Guangdong 518057 (CN)
(74) Representative: Brevalex
(86) International application number: PCT/CN2014/077767
(87) International publication number: WO 2015/139363

(57) **Abstract**

Provided is a terminal capability control method. In the method, a User Equipment (UE) reports Buffer Status Reports (BSRs) to each evolved Node B (eNB) connected to the UE; and the UE receives uplink licence information sent by each eNB, wherein the uplink licence information is configured by each eNB according to the BSRs and a UE capability allocation rule negotiated in accordance with a UE capability range. Another terminal capability control method, a UE and an eNB and two computer storage media are also provided.

## Description

### TECHNICAL FIELD

The disclosure relates to a terminal capability management technology in mobile communications, and in particular to a terminal capability control method, a terminal, an evolved Node B (eNB) and a computer storage medium.

### BACKGROUND

In a Long Term Evolution (LTE) system, a User Equipment (UE) capability includes: maximum transmitting power of a UE, a maximum data volume capable of being received and sent by a UE within a transmission time interval, a maximum data volume capable of being buffered in a memory of a UE, and the like. During communication, it is required that present transmitting power cannot exceed the maximum transmitting power of the UE. Usually, the UE notifies an evolved Node B (eNB) of a difference between the maximum transmitting power of the UE and transmitting power of a present uplink share channel by means of a Power Headroom Report (PHR), and the eNB performs uplink scheduling and link adaption according to a notice sent by the UE, and decides whether to perform power control, e.g., reducing or increasing the transmitting power, or adjusting the magnitude of the transmitting power, so as to meet a requirement that the present transmitting power of the UE cannot exceed the maximum transmitting power of the UE.

The UE capability can be well controlled in the case of a single carrier. However, due to shortage of spectral resources and sharp increase of mobile user services, demands for covering hot spots using high frequencies become strong increasingly. Thus, in order to improve the throughput and mobility of users, adopting a low-power node becomes a new application scenario. When the hot spots are covered using the high frequencies, the defects of severe attenuation of a mobile signal, small coverage range of a cell, inability to share a station with a conventional cell and the like exist, so an operator adopts dual connection as an enhanced solution.

Under dual connection, the UE can keep connected to two or more network nodes at the same time. However, in a control plane, the UE is connected to only one cell. Here, the network nodes refer to eNBs, and a time delay between the eNBs cannot be ignored. For instance, a macro eNB serving as a network node is referred to as an MeNB, a small cell eNB serving as a network node is referred to as an SeNB, the two network nodes schedule the UE in real time, and one of the network nodes cannot know, in time, the scheduling of the UE by the other network node. As a result, at a certain moment or some moments, the problems of data transmission failure, data loss and the like would be caused by the fact that the UE goes beyond self capabilities, and accordingly, the user experience is reduced.

### SUMMARY

In view of this, the embodiments of the disclosure are expected to provide a terminal capability control method, a terminal, an eNB and a computer storage medium, which enables the eNB to effectively control a UE capability and avoids the UE from going beyond self capabilities.

The technical solutions of the embodiments of the disclosure are implemented as follows.

According to a first aspect of the embodiments of the disclosure, a terminal capability control method is provided, which may include that: a UE reports Buffer Status Reports (BSRs) to each eNB connected to the UE; and the UE receives uplink licence information sent by each eNB, wherein the uplink licence information is configured by each eNB according to the BSRs and a UE capability allocation rule negotiated in accordance with a UE capability range.

Preferably, the connection between the UE and the eNBs may be user plane connections.

Preferably, N eNBs may be connected to the UE. The step that the UE reports the BSRs to each eNB connected to the UE may include that: the UE reports BSRs of N eNBs connected to the UE to each eNB connected to the UE; or the UE reports BSRs of less than N eNBs connected to the UE to each eNB connected to the UE.

Preferably, the step that the UE reports the BSRs to each eNB connected to the UE may include that: the UE reports the BSRs in accordance with eNB identifiers, or the UE reports the BSR in accordance with a set report rule, wherein the eNB identifier includes: an eNB ID or an eNB index value.

According to a second aspect of the embodiments of the disclosure, a terminal capability control method is also provided, which may include that: two or more eNBs receive BSRs sent by a UE connected to the two or more eNBs, separately; the two or more eNBs negotiate a UE capability allocation rule in accordance with a UE capability range; and the two or more eNBs configure the UE with an uplink licence according to the acquired BSRs and the UE capability allocation rule, and send uplink licence information to the UE.

Preferably, the number of the eNBs may be N. The method may further include that: when each eNB receives BSRs of less than N eNBs connected to the UE, the N eNBs acquire the BSR of each eNB connected to the UE in a request/answer manner or a push manner.

Preferably, the method may further include that: when the signal quality of a cell connected to the UE is changed, or the load of the cell connected to the UE is changed, or the quantity of the eNBs connected to the UE is changed, the two or more eNBs re-negotiate a UE capability allocation rule in accordance with the UE capability range.

According to a third aspect of the embodiments of the disclosure, a UE is provided, which may include: a reporting module and a receiving module, wherein
the reporting module is configured to report BSRs to each eNB connected to the UE; and
the receiving module is configured to receive uplink licence information sent by each eNB, the uplink licence information being configured by each eNB according to the BSRs and a UE capability allocation rule negotiated in accordance with a UE capability range.

Preferably, connection between the UE and the eNBs may be user plane connection.

Preferably, N eNBs may be connected to the UE. The reporting module may be configured to: report BSRs of the N eNBs connected to the UE to each eNB connected to the UE; or report BSRs of less than the N eNBs connected to the UE to each eNB connected to the UE.

Preferably, the reporting module may be configured to report the BSRs in accordance with eNB identifiers, or the reporting module may report the BSRs in accordance with a set report rule, wherein the eNB identifier includes: an eNB ID or an eNB index value.

According to a fourth aspect of the embodiments of the disclosure, an eNB is provided, which may include: a BSR acquisition module, a negotiation module and a configuration module, wherein
the BSR acquisition module is configured to receive BSRs sent by a UE connected to two or more eNBs, respectively;
the negotiation module is configured to negotiate a UE capability allocation rule of the UE connected to the two or more eNBs with negotiation modules of other eNBs than the present eNB in accordance with a UE capability range; and
the configuration module is configured to configure the UE, connected to the two or more eNBs, with an uplink licence according to the acquired BSRs and the UE capability allocation rule, and send uplink licence information to the UE.

Preferably, the number of the eNBs may be N. When the BSR acquisition module acquires BSRs of less than the N eNBs connected to the UE, the BSR acquisition module may be further configured to acquire the BSR of each eNB connected to the UE in a request/answer manner or a push manner in conjunction with BSR acquisition modules of the other eNBs than the present eNB.

Preferably, the negotiation module may be further configured to re-negotiate, when the signal quality of a cell connected to the UE is changed, or the load of the cell connected to the UE is changed, or the quantity of the eNBs connected to the UE is changed, a UE capability allocation rule of the UE connected to the eNBs with the negotiation modules of the other eNBs than the present eNB in accordance with the UE capability range.

According to a fifth aspect of the embodiments of the disclosure, a computer storage medium is also provided. Computer programs may be stored in the computer storage medium, and may be configured to execute the method according to any one of contents in the first aspect.

According to a sixth aspect of the embodiments of the disclosure, a computer storage medium is also provided. Computer programs may be stored in the computer storage medium, and may be configured to execute the method according to any one of contents in the second aspect.

The embodiments of the disclosure provide a terminal capability control method, a UE, an eNB and a computer storage medium. Two or more eNBs pre-negotiate a UE capability allocation rule of a UE connected to the eNBs in accordance with a UE capability range; the UE reports BSRs to each eNB connected to the UE, and each eNB configures each UE connected to the eNB with an uplink licence according to the acquired BSR and the UE capability allocation rule, wherein the BSR reported to each eNB by the UE includes an eNB identifier, and the eNB identifier may be an eNB ID or an eNB index value; and the UE may report the BSRs in accordance with the eNB identifiers sequentially, or may report the BSRs in accordance with a set report rule. Thus, each eNB connected to the UE may know buffer data information about the eNBs connected to the UE, such that the eNBs connected to the UE can effectively control a UE capability, thereby avoiding the phenomena of data transmission failure, data loss and the like caused by the fact that the UE goes beyond self capabilities.

### BRIEF DESCRIPTION OF THE DRAWINGS

Fig. 1 is a basic processing flow diagram of a terminal capability control method at a UE side according to an embodiment of the disclosure;
Fig. 2 is a basic processing flow diagram of a terminal capability control method at an eNB side according to an embodiment of the disclosure;
Fig. 3 is a basic processing flow diagram of a terminal capability control method according to an embodiment of the disclosure;
Fig. 4 is a specific implementation flow diagram of a terminal capability control method according to an embodiment of the disclosure;
Fig. 5 is a detailed implementation flow diagram of a terminal capability control method according to an embodiment of the disclosure;
Fig. 6 is a content diagram of BSRs reported to a first eNB and a second eNB by a UE according to an embodiment of the disclosure;
Fig. 7 is a detailed implementation diagram of another terminal capability control method according to an embodiment of the disclosure;
Fig. 8 is a content diagram of a BSR reported to a first eNB by a UE according to an embodiment of the disclosure;
Fig. 9 is a content diagram of a BSR reported to a second eNB by a UE according to an embodiment of the disclosure;
Fig. 10 is a detailed implementation diagram of another terminal capability control method according to an embodiment of the disclosure;
Fig. 11 is a content diagram of BSRs containing eNB identifiers and reported to a first eNB and a second eNB by a UE according to an embodiment of the disclosure;
Fig. 12 is a composition structure diagram of a UE according to an embodiment of the disclosure;
Fig. 13 is a composition structure diagram of an eNB according to an embodiment of the disclosure; and
Fig. 14 is a composition structure diagram of a terminal capability control system according to an embodiment of the disclosure.

### DETAILED DESCRIPTION

Preferred embodiments of the disclosure are illustrated below in conjunction with the drawings in detail. It will be appreciated that the preferred embodiments illustrated below are only used to illustrate and explain the disclosure, and do not limit the disclosure.

When a connected UE has uplink data to send, the UE will send a Buffer Status Report (BSR) to an eNB if there are no uplink resources or uplink licence, the BSR carrying buffer data information, namely an index value corresponding to a buffer data size, prepared on a Logical Channel Group (LCG) to which a Data Radio Bearer (DRB) is attached; and the eNB obtains the buffer data size according to the BSR, and can obtain the size of data to be sent by the UE by means of the buffer data size, thereby obtaining a UE capability required to send the data.

In the embodiments of the disclosure, two or more eNBs pre-negotiate a UE capability allocation rule of a UE connected to the eNBs in accordance with a UE capability range; and the UE reports BSRs to each eNB connected to the UE, and each eNB configures each UE connected to the eNB with an uplink license according to the received BSRs and the UE capability allocation rule, wherein the two or more eNBs include two eNBs.

Specifically, the BSR reported to each eNB by the UE includes an eNB identifier, wherein the eNB identifier may be an eNB identifier (ID) or an eNB index value.

The UE may report the BSRs sequentially in accordance with the eNB IDs or the eNB index values. The UE may also report the BSRs in accordance with a set report rule. Specifically, Taking two eNBs, namely an eNB 1 and an eNB2 as an example, the set report rule includes:
a. When reporting BSRs to the eNB1, the UE firstly reports the BSR of the present eNB, namely the eNB1, and then reports the BSRs of other eNBs than the eNB1; when reporting BSRs to the eNB2, the UE firstly reports the BSR of the present eNB, namely the eNB2, and then reports the BSRs of other eNBs than the eNB2; and if there are three or more eNBs, when reporting BSRs to an eNB, the UE firstly reports the BSR of the present eNB, and then reports the BSRs of other eNBs sequentially in accordance with eNB IDs or eNB index values.
b. The UE reports BSRs in a fixed order. That is, the UE firstly reports the BSR of the eNB1 and then reports the BSR of the eNB2. The UE reports the BSRs to both the eNB1 and the eNB2 in accordance with this rule. If there are three or more eNBs, when reporting BSRs to an eNB, the UE reports BSRs of other eNBs sequentially in accordance with eNB IDs or eNB index values. When the number of the eNBs is N, the UE may report BSRs of N eNBs connected to the UE to each eNB connected to the UE; or the UE may report BSRs of less than N eNBs connected to the UE to each eNB connected to the UE. When the UE reports BSRs of less than N eNBs connected to the UE to each eNB connected to the UE, the N eNBs acquire the BSR of each eNB connected to the UE in a request/answer manner or a push manner.

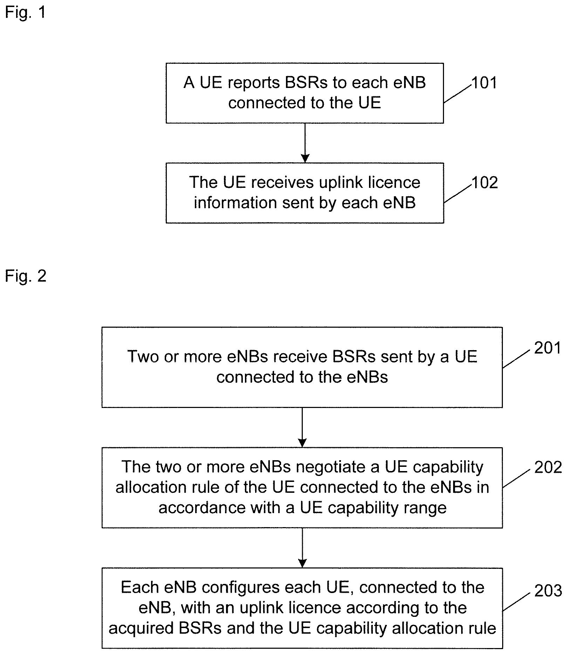

Fig. 1 shows a basic processing flow of a terminal capability control method at the UE side according to an embodiment of the disclosure. The method includes the steps as follows.

Step 101: the UE reports BSRs to each eNB connected to the UE.

Here, the connections between the UE and the eNBs are user plane connections.

Specifically, when the number of the eNBs is N, the UE reports BSRs of N eNBs connected to the UE to each eNB connected to the UE, or the UE reports BSRs of less than N eNBs connected to the UE to each eNB connected to the UE, where N is an integer greater than or equal to 2.

The UE may report the BSRs in accordance with eNB identifiers, or the UE may report the BSRs in accordance with a set report rule, wherein the eNB identifier includes: an eNB ID or an eNB index value.

Two eNBs, namely an eNB 1 and an eNB2, are taken as an example. Specifically, the set report rule includes:
a. When reporting BSRs to the eNB1, the UE firstly reports the BSR of the present eNB, namely the eNB1, and then reports the BSRs of other eNBs than the eNB1; when reporting BSRs to the eNB2, the UE reports the BSR of the present eNB, namely the eNB2, and then reports the BSRs of other eNBs than the eNB2; and if there are three or more eNBs, when reporting BSRs to an eNB, the UE reports the BSR of the present eNB, and then reports the BSRs of other eNBs sequentially in accordance with eNB IDs or eNB index values.
b. The UE reports BSRs in a fixed order. That is, the UE firstly reports the BSR of the eNB1 and then reports the BSR of the eNB2. The UE reports the BSRs to both the eNB1 and the eNB2 in accordance with this rule. If there are three or more eNBs, when reporting BSRs to an eNB, the UE reports the BSRs of other eNBs sequentially in accordance with eNB IDs or eNB index values.

Step 102: The UE receives uplink licence information sent by each eNB,
wherein the uplink licence information is configured by each eNB according to the BSRs and a UE capability allocation rule negotiated in accordance with a UE capability range.

Fig. 2 shows an eNB-side basic processing flow of a terminal capability control method according to an embodiment of the disclosure. The method includes the steps as follows.

Step 201: two or more eNBs receive BSRs sent by a UE connected to the eNBs, respectively,
wherein the two or more eNBs include two eNBs.

Specifically, the number of the eNBs is N. When the UE reports BSRs of less than N eNBs connected to the UE to each eNB connected to the UE, the N eNBs acquire the BSR of each eNB connected to the UE in a request/answer manner or a push manner.

When the UE reports BSRs of less than N eNBs connected to the UE to each eNB connected to the UE, the UE may only report the BSR of the present eNB. That is, a BSR reported to an eNB1 by the UE only contains a BSR of the eNB1, and a BSR reported to an eNB2 by the UE only contains a BSR of the eNB2. By means of the request/answer manner or the push manner between the eNB1 and the eNB2, the eNB1 can acquire the BSR of the eNB2, and the eNB2 can acquire the BSR of the eNB1. Specifically, the eNB1 sends BSR information about the UE on the present eNB to the eNB2, and the eNB2 responds to the eNB1 with BSR information about the UE on the eNB2.

Step 202: The two or more eNBs negotiate a UE capability allocation rule of the UE connected to the eNBs in accordance with a UE capability range,
wherein the UE capability allocation rule is allocating capabilities on each connected eNB available to the UE according to a ratio of buffer data sizes of the two or more eNBs.

Step 203: Each eNB configures each UE, connected to the eNB, with an uplink licence according to the acquired BSRs and the UE capability allocation rule.

When the signal quality of a cell connected to the UE is changed, or the load of the cell connected to the UE is changed, or the number of the eNBs connected to the UE is changed, the method further includes that: the two or more eNBs re-negotiate a UE capability allocation rule of the UE connected to the eNBs in accordance with the UE capability range.

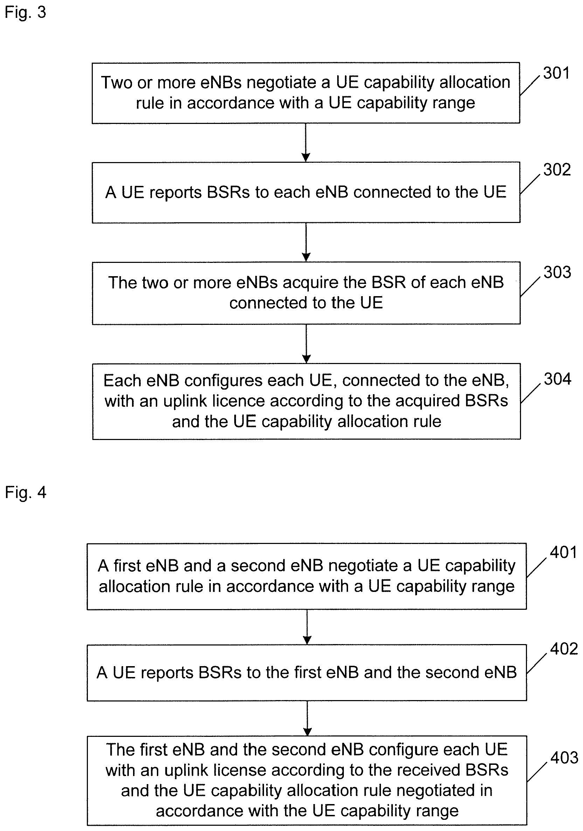

Fig. 3 shows a basic processing flow of a terminal capability control method according to an embodiment of the disclosure. The method includes the steps as follows.

Step 301: two or more eNBs negotiate a UE capability allocation rule in accordance with a UE capability range,
wherein the two or more eNBs include two eNBs.

Specifically, the capabilities on each eNB available to the UE are allocated according to a ratio of buffer data sizes of each eNB and the UE capability range.

Step 302: The UE reports a BSR to each eNB connected to the UE.

Here, the connection between the UE and the eNBs may be user plane connection.

Specifically, when the number of the eNBs is N, the UE reports BSRs of the N eNBs connected to the UE to each eNB connected to the UE, or the UE reports BSRs of less than the N eNBs connected to the UE to each eNB connected to the UE.

The UE may report the BSRs in accordance with eNB identifiers, or the UE may report the BSRs in accordance with a set report rule,
wherein the eNB identifier includes: an eNB ID or an eNB index value. The eNB index values may be defined as 0, 1, 2, ... in accordance with the eNB IDs from large to small, or may be defined as 0, 1, 2, ... in accordance with the eNB IDs from small to large.

Specifically, taking two eNBs, namely an eNB 1 and an eNB2, as an example. the set report rule includes
a. When reporting BSRs to the eNB1, the UE firstly reports the BSR of the present eNB, namely the eNB1, and then reports the BSR of the other eNB than the eNB1; or the UE reports BSRs in accordance with a fixed order, that is, the UE reports the BSR of the eNB1 and then reports the BSR of the eNB2; and when there are three or more eNBs, the UE may firstly report the BSR of the present eNB, and then report BSRs sequentially in accordance with eNB IDs or eNB index values.
b. The UE firstly reports BSRs to the present eNB, namely the eNB1, and then reports BSRs to the eNB2; or the UE firstly reports BSRs to the eNB2, and then reports BSRs to the eNB1; and when there are three or more eNBs, the UE may report BSRs to an eNB to which a cell serving the UE is attached, and then report BSRs sequentially in accordance with eNB IDs or eNB index values.

Step 303: The two or more eNBs acquire the BSR of each eNB connected to the UE,
wherein the two or more eNBs include two eNBs.

Specifically, the step that the eNBs acquire the BSR of each eNB connected to the UE includes that: when the number of the eNBs is N, each eNB receives BSRs, sent by the UE, of N eNBs connected to the UE; or each eNB receives BSRs, sent by the UE, of less than N eNBs connected to the UE, and then the N eNBs acquire the BSR of each eNB connected to the UE in a request/answer manner or a push manner.

When the UE reports BSRs of less than N eNBs connected to the UE to each eNB connected to the UE, the UE may only report the BSR of the present eNB. That is, the BSR reported to the eNB1 by the UE only contains the BSR of the eNB1, and the BSR reported to the eNB2 by the UE only contains the BSR of the eNB2. By means of the request/answer manner or the push manner between the eNB1 and the eNB2, the eNB1 acquires the BSR of the eNB1, and the eNB2 acquires the BSR of the eNB1. Specifically, the eNB1 sends BSR information about the UE on the present eNB to the eNB2, and the eNB2 returns BSR information about the UE on the eNB2 to the eNB1.

Step 304: Each eNB configures each UE, connected to the eNB, with an uplink licence according to the acquired BSRs and the UE capability allocation rule.

Specifically, the UE capability allocation rule is allocating capabilities on each eNB available to the connected UE according to a ratio of buffer data sizes of the two or more eNBs.

When the signal quality of a cell connected to the UE is changed, or the load of the cell connected to the UE is changed, or the number of the eNBs connected to the UE is changed, the two or more eNBs re-negotiate a UE capability allocation rule of the UE connected to the eNBs in accordance with the UE capability range.

The technical solutions of the disclosure are further elaborated below in conjunction with the drawings and specific embodiments in detail.

Fig. 4 shows a specific implementation flow of a terminal capability control method according to an embodiment of the disclosure.

Step 401: A first eNB and a second eNB negotiate a UE capability allocation rule in accordance with a UE capability range.

Specifically, the first eNB and the second eNB allocate capabilities on the first eNB and the second eNB available to the UE respectively, according to a ratio of buffer data sizes of two eNBs and the UE capability range. The negotiated UE capability allocation rule is shown in Table 1.

**Table 1**

| Ratio of buffer data of terminal on first eNB to that on second eNB | Allocation ratio of terminal capability for sending first eNB data to that for sending second eNB data |
|---|---|
| 0:4 | 0:1 |
| 1:4 | 1:1 |
| 1:3 | 1:1 |
| 1:2 | 2:1 |
| 1:1 | 2:1 |
| 2:1 | 2:1 |
| 3:1 | 3:1 |
| 4:1 | 3:1 |
| 4:0 | 1:0 |

Step 402: The UE reports BSRs to the first eNB and the second eNB.

Specifically, the UE reports BSRs of the first eNB and the second eNB to the first eNB and the second eNB. The UE is notified that data to be sent on the first eNB is 1000 and data to be sent on the second eNB is 2000. That is, the ratio of data sent by the UE on the first eNB to data sent by the UE on the second eNB is 1:2.

Step 403: The first eNB and the second eNB configure each UE with an uplink license according to the received BSRs and the UE capability allocation rule negotiated in accordance with the UE capability range.

The first eNB obtains that the ratio of data sent by the UE on the first eNB to data sent by the UE on the second eNB is 1:2. That is, the UE sends data for the first eNB at one third of its power, the UE sends data for the second eNB at two thirds of its power, and the first eNB and the second eNB configure the UE with the uplink license accordingly.

After Step 403, when the signal quality of a cell is changed, or the load of the cell is changed, or the data volume of a certain eNB is suddenly increased, the eNB may propose to re-negotiate a UE capability allocation rule. An allocation ratio of a capability of the UE for sending first eNB data to a capability of the UE for sending second eNB data is not completely equal to a ratio of buffer data of the UE on the first eNB to buffer data of the UE on the second eNB.

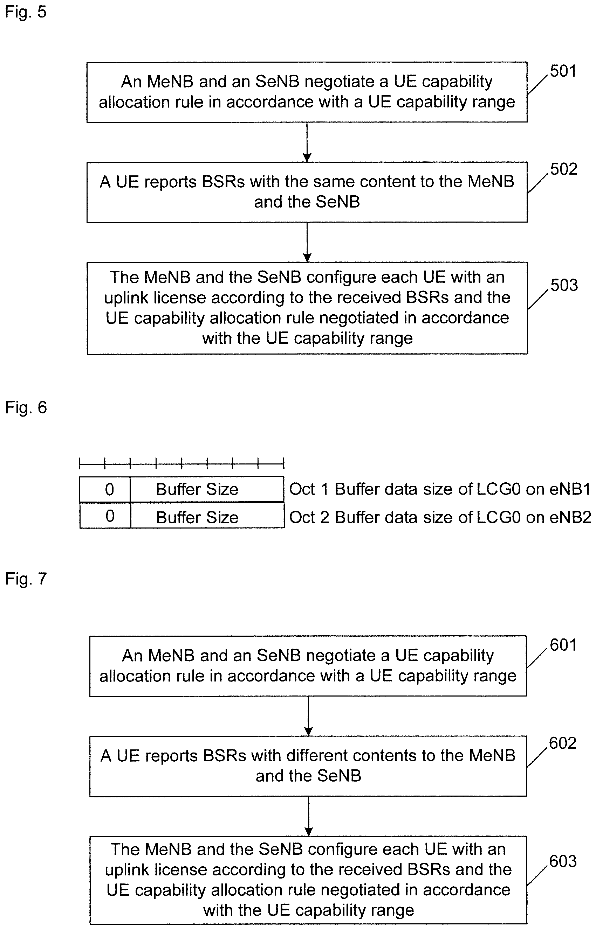

For instance, the first eNB is an MeNB, a first cell is subordinate to the MeNB, the second eNB is an SeNB, and a third cell and a fourth cell are subordinate to the SeNB. Both the MeNB and the SeNB have only one LCG0; the UE establishes connection with the first cell; and as the service volume is increased, the MeNB adds the third cell to the UE according to a measurement report and configures the UE with a first DRB and a second DRB, the two DRBs being both attached to the LCG0, wherein the first DRB is a bearer on the MeNB, and the second DRB is a bearer on the SeNB. Accordingly, Fig. 5 shows a detailed implementation flow of a terminal capability control method in the present embodiment. The method includes the steps as follows.

Step 501: An MeNB and an SeNB negotiate a UE capability allocation rule in accordance with a UE capability range.

Specifically, the MeNB and the SeNB allocate capabilities on the MeNB and the SeNB available to a UE according to a ratio of buffer data sizes of two eNBs and the UE capability range.

Step 502: The UE reports BSRs with the same content to the MeNB and the SeNB.

Specifically, the UE reports a BSR of the MeNB and then reports a BSR of the SeNB by pre-appointment.

The contents of the reported BSRs are shown in Fig. 6. The BSRs contain buffer data information on an LCG0. Both the MeNB and the SeNB have only one LCG0, so short BSRs are reported.

Step 503: The MeNB and the SeNB configure each UE with an uplink license according to the received BSRs and the UE capability allocation rule negotiated in accordance with the UE capability range.

Specifically, the MeNB and the SeNB can configure the UE with the uplink license according to the received BSRs and the UE capability allocation rule negotiated in Step 501. The MeNB and the SeNB can decide to re-negotiate a UE capability allocation rule according to the received BSRs. After the negotiation is completed, the MeNB and the SeNB configure the UE with the uplink license in accordance with a new UE capability allocation rule.

For instance, a first eNB is the MeNB, a first cell is subordinate to the MeNB, a second eNB is the SeNB, and a third cell and a fourth cell are subordinate to the SeNB. Both the MeNB and the SeNB have only one LCG0; the UE establishes connection with the first cell; and as the service volume is increased, the MeNB adds the third cell to the UE according to a measurement report and configures the UE with a first DRB and a second DRB, the two DRBs being both attached to the LCG0, wherein the first DRB is a bearer on the MeNB, the second DRB is a bearer on the SeNB, and the second DRB can be sent by the MeNB and the SeNB separately. Accordingly, Fig. 7 shows a detailed implementation flow of another terminal capability control method in the present embodiment. The method includes the steps as follows.

Step 601: An MeNB and an SeNB negotiate a UE capability allocation rule in accordance with a UE capability range.

Specifically, the MeNB and the SeNB allocate capabilities on the MeNB and the SeNB available to a UE according to a ratio of buffer data sizes of two eNBs and the UE capability range.

Step 602: The UE reports BSRs with different contents to the MeNB and the SeNB.

Specifically, the UE reports to the MeNB a BSR of the MeNB and then a BSR of the SeNB by appointment, or the UE reports to the SeNB a BSR of the SeNB and then a BSR of the MeNB by appointment.

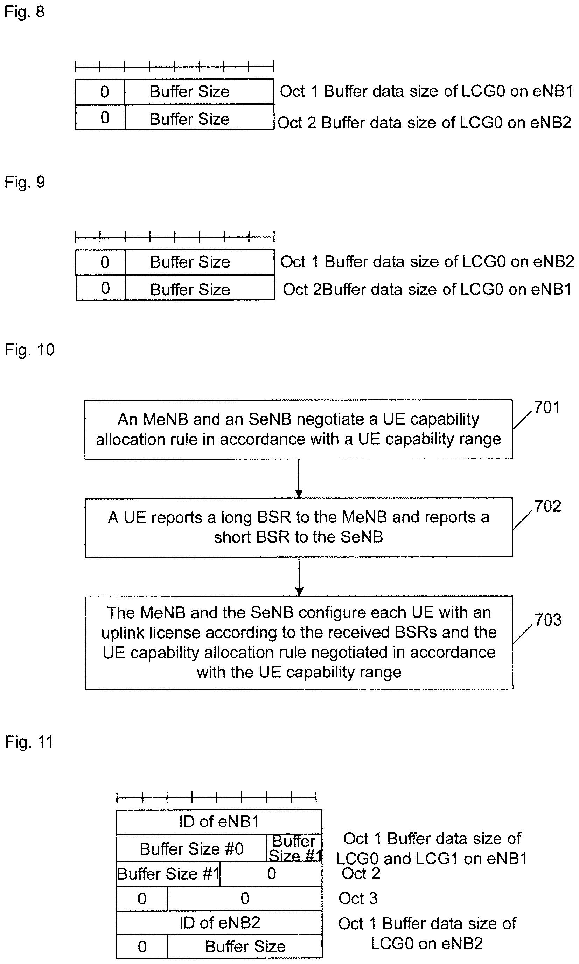

The contents of the BSR reported to the MeNB by the UE are shown in Fig. 8. The contents of the BSR reported to the SeNB by the UE are shown in Fig. 9. The BSRs contain buffer data information on an LCG0. Both the MeNB and the SeNB have only one LCG0, so short BSRs are reported.

Step 603: The MeNB and the SeNB configure each UE with an uplink license according to the received BSRs and the UE capability allocation rule negotiated in accordance with the UE capability range.

Specifically, the MeNB and the SeNB can configure the UE with the uplink license according to the received BSRs and the UE capability allocation rule negotiated in Step 601. The MeNB and the SeNB can decide to re-negotiate a UE capability allocation rule according to the received BSRs. After the negotiation is completed, the MeNB and the SeNB configure the UE with the uplink license in accordance with a new UE capability allocation rule.

For instance, a first eNB is the MeNB, a first cell is subordinate to the MeNB, a second eNB is the SeNB, and a third cell and a fourth cell are subordinate to the SeNB. The MeNB has two LCGs, namely an LCG0 and an LCG1, and the SeNB has an LCG; the UE establishes connection with the first cell; and as the service volume is increased, the MeNB adds the third cell to the UE according to a measurement report and configures the UE with a first DRB and a second DRB, wherein the first DRB is attached to the LCG0, the second DRB is attached to the LCG1, and the second DRB can be sent by the MeNB and the SeNB separately. Accordingly, Fig. 10 shows a detailed implementation flow of another terminal capability control method in the present embodiment. The method includes the steps as follows.

Step 701: An MeNB and an SeNB negotiate a UE capability allocation rule in accordance with a UE capability range.

Specifically, the MeNB and the SeNB allocate capabilities on the MeNB and the SeNB available to a UE according to a ratio of buffer data sizes of two eNBs and the UE capability range.

Step 702: The UE reports a long BSR to the MeNB and reports a short BSR to the SeNB.

Specifically, the MeNB has two LCGs, so the long BSR is reported, the long BSR containing buffer data information on an LCG0 and an LCG1.

The SeNB has an LCG, so the short BSR is reported, the short BSR containing the buffer data information on the LCG0.

As shown in Fig. 11, eNB ID information is added in front of the reported BSRs, wherein an MeNB ID and an SeNB ID may be global IDs containing 28 bits, or may be relative IDs, where an eNB with a small eNB ID is represented by 0, and an eNB with a large eNB ID is represented by 1; or the eNB with the small eNB ID is represented by 1, and the eNB with the large eNB ID is represented by 0.

In the present step, if there are a plurality of eNBs, BSRs may be sent in accordance with actual eNB IDs, or the BSRs may be sent in accordance with eNB IDs from large to small or from small to large.

Step 703: The MeNB and the SeNB configure each UE with an uplink license according to the received BSRs and the UE capability allocation rule negotiated in accordance with the UE capability range.

In the present embodiment, if an eNB also configures a terminal with DRBs on an LCG2 and an LCG3, the terminal has to report all the LCGs in accordance with the technical solution in Step 702.

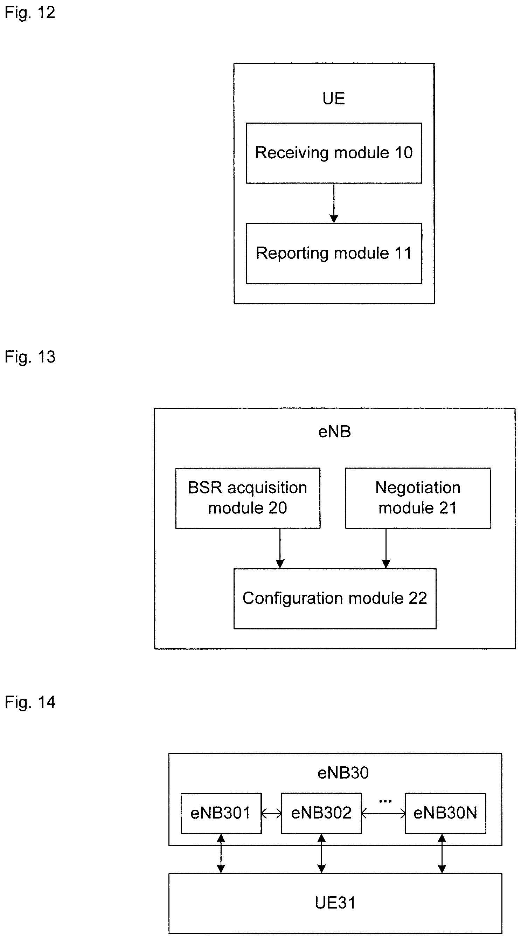

An embodiment of the disclosure also provides a UE. As shown in Fig. 12, the UE includes: a receiving module 10 and a reporting module 11.

The receiving module 10 is configured to receive uplink licence information sent by each eNB connected to the UE.

The uplink licence information is configured by each eNB according to BSRs and a UE capability allocation rule negotiated in accordance with a UE capability range; and

The reporting module 11 is configured to report the BSRs to each eNB connected to the UE.

The specific structure of the receiving module 10 may be a receiving interface such as a receiving antenna.

The specific interface of the reporting module may be a sending interface such as a sending antenna.

Preferably, when reporting the BSRs to each eNB connected to the UE, the reporting module is configured to: when the number of the eNBs is N,
report BSRs of the N eNBs connected to the UE to each eNB connected to the UE;
or, report BSRs of less than the N eNBs connected to the UE to each eNB connected to the UE.

The reporting module may report the BSRs in accordance with eNB identifiers, or may report the BSR in accordance with a set report rule,
where the eNB identifier includes: an eNB ID or an eNB index value.

The set report rule is as follows. The UE reports BSRs to an eNB to which a cell serving the UE is attached, and then reports BSRs to other eNBs than the eNB to which the cell serving the UE is attached. Or, the UE reports BSRs to other eNBs than an eNB to which a cell serving the UE is attached, and then reports BSRs to the eNB to which the cell serving the UE is attached. When there are three or more eNBs, the UE may report BSRs to an eNB to which a cell serving the UE is attached, and then report BSRs sequentially in accordance with eNB IDs or eNB index values.

In order to implement the terminal capability control method, an embodiment of the disclosure also provides an eNB. As shown in Fig. 13, the eNB includes: a BSR acquisition module 20, a negotiation module 21 and a configuration module 22.

The BSR acquisition module 20 is configured to receive BSRs sent by a UE connected to the eNB.

The negotiation module 21 is configured to negotiate a UE capability allocation rule of the UE connected to the eNB with negotiation modules of other eNBs in accordance with a UE capability range.

The configuration module 22 is configured to configure each UE, connected to the eNB, with an uplink licence according to the acquired BSRs and the UE capability allocation rule, and send uplink licence information to the UE.

The specific structure of the acquisition module 20 may be a receiving interface such as a receiving antenna or a receiving antenna array.

The specific structure of the negotiation module 21 may include a communication interface, the communication interface is configured to carry out negotiation between the eNBs, and the communication interface may be a wired or wireless communication interface such as an air interface.

The specific structure of the configuration module 22 may be a processor, the processor may configure an uplink licence by executing a readable instruction, and the processor may be an electronic component having a processing function such as a Central Processing Unit (CPU), a Micro Processor Unit (MPU), a Digital Signal Processor (DSP) or a programmable logic array.

Preferably, the number of the eNBs is N. When each eNB receives BSRs of less than N eNBs connected to the UE, the BSR acquisition module 20 is further configured to acquire the BSR of each eNB connected to the UE in a request/answer manner or a push manner in conjunction with BSR acquisition modules of the other eNBs.

The negotiation module 21 is further configured to re-negotiate, when the signal quality of a cell connected to the UE is changed, or the load of the cell connected to the UE is changed, or the quantity of the eNBs connected to the UE is changed, a UE capability allocation rule of the UE connected to the eNB with the negotiation modules of the other eNBs in accordance with the UE capability range.

In order to implement the terminal capability control method, an embodiment of the disclosure also provides a terminal capability control system. Fig. 14 shows a composition structure of the terminal capability control system. The terminal capability control system includes: eNBs 30 and a UE 31.

The eNBs 30 are configured to acquire BSRs sent by the UE 31 connected to the eNBs 30; and the eNBs 30 are further configured to negotiate a capability allocation rule of the UE 31 connected to the eNBs 30 with other eNBs 30 in accordance with a capability range of the UE 31.

Here, there are two or more eNBs 30.

The UE 31 is configured to report BSRs to each of the eNBs 30 connected to the UE 31.

Here, the UE 31 may report the BSRs in accordance with eNB identifiers, or may report the BSRs in accordance with a set report rule,
wherein the eNB identifier includes: an eNB ID or an eNB index value.

The set report rule is as follows. The UE reports BSRs to an eNB to which a cell serving the UE is attached, and then reports BSRs to other eNBs than the eNB to which the cell serving the UE is attached. Or, the UE reports BSRs to other eNBs than an eNB to which a cell serving the UE is attached, and then reports BSRs to the eNB to which the cell serving the UE is attached. When there are three or more eNBs, the UE may report BSRs to an eNB to which a cell serving the UE is attached, and then report BSRs sequentially in accordance with eNB IDs or eNB index values.

The UE 31 is further configured to receive uplink license information sent by each eNB 30.

Here, the uplink licence information is configured by each eNB 30 according to the BSRs and the capability allocation rule of the UE 31 negotiated in accordance with the capability range of the UE 31.

The eNBs 30 are further configured to configure each UE 31 with an uplink license according to the acquired BSRs and the negotiated capability allocation rule of the UE 31.

Here, the capability allocation rule refers to: allocating capabilities available to a UE connected to eNBs according to a ratio of buffer data sizes of two or more eNBs and a UE capability range.

In practical application, the UE 31 may adopt a UE composition structure shown in Fig. 12, and each eNB 30 may adopt an eNB composition structure shown in Fig. 13.

It is important to note that in practical application, functions of the receiving module 10, the reporting module 11, the BSR acquisition module 20, the negotiation module 21 and the configuration module 22 may be implemented by CPUs or MPUs or DSPs or Field-Programmable Gate Arrays (FPGA) located in a UE and an eNB respectively.

According to an embodiment of the disclosure, a computer storage medium is also recorded. Computer executable instructions are stored in the computer storage medium, and are configured to execute any of the methods described above (for example, the method shown in Fig. 1) at a terminal side.

According to an embodiment of the disclosure, another computer storage medium is also recorded. Computer executable instructions are stored in the computer storage medium, and are configured to execute any of the methods described above (for example, the method shown in Fig. 2) at an eNB side.

The computer storage media may include storage media such as optical disks, U disks or Digital Video Disks (DVD), and preferably, are non-transient storage media.

The above is only the preferred embodiments of the disclosure, and is not used to limit the protective scope of the disclosure. Any modifications made in accordance with the principle of the disclosure shall be interpreted as falling within the protective scope of the disclosure.

## Claims

1. A terminal capability control method, comprising:
reporting, by a User Equipment (UE), Buffer Status Reports (BSRs) to each evolved Node B (eNB) connected to the UE; and
receiving, by the UE, uplink licence information sent by each eNB,
wherein the uplink licence information is configured by each eNB according to the BSRs and a UE capability allocation rule negotiated in accordance with a UE capability range.

2. The terminal capability control method according to claim 1, wherein the connections between the UE and the eNBs are user plane connections.

3. The terminal capability control method according to claim 1, wherein there are N eNBs that are connected to the UE; and
wherein the reporting, by the UE, the BSRs to each eNB connected to the UE comprises:
reporting, by the UE, the BSRs of the N eNBs connected to the UE to each eNB connected to the UE; or
reporting, by the UE, the BSRs of less than the N eNBs connected to the UE to each eNB connected to the UE.

4. The terminal capability control method according to claim 1, wherein the reporting, by the UE, the BSRs to each eNB connected to the UE comprises:
reporting, by the UE, the BSRs in accordance with eNB identifiers, or
reporting, by the UE, the BSRs in accordance with a set report rule,
wherein the eNB identifier comprises: an eNB ID or an eNB index value.

5. A terminal capability control method, comprising:
receiving, by each of two or more evolved Nodes Bs (eNBs), Buffer Status Reports (BSRs) sent by a User Equipment (UE) connected to the two or more eNBs;
negotiating, by the two or more eNBs, a UE capability allocation rule in accordance with a UE capability range; and
configuring, by each of the two or more eNBs, the UE with an uplink licence according to the acquired BSRs and the UE capability allocation rule, and sending uplink licence information to the UE.

6. The terminal capability control method according to claim 5, wherein the eNBs comprise N eNBs; and
wherein the method further comprises: in the case that each eNB receives the BSRs of less than the N eNBs connected to the UE, acquiring, by the N eNBs, the BSRs of each eNB connected to the UE in a request/answer manner or a push manner.

7. The terminal capability control method according to claim 5, further comprising:
when signal quality of a cell connected to the UE is changed, or load of the cell connected to the UE is changed, or a number of the eNBs connected to the UE is changed, re-negotiating, by the two or more eNBs, the UE capability allocation rule in accordance with the UE capability range.

8. A User Equipment (UE), comprising: a reporting module and a receiving module,
wherein the reporting module is configured to report Buffer Status Reports (BSRs) to each evolved Node B (eNB) connected to the UE; and
wherein the receiving module is configured to receive uplink licence information sent by each eNB,
wherein the uplink licence information is configured by each eNB according to the BSRs and a UE capability allocation rule negotiated in accordance with a UE capability range.

9. The UE according to claim 8, wherein the connections between the UE and the eNBs are user plane connections.

10. The UE according to claim 8, wherein there are N eNBs that are connected to the UE; and
wherein the reporting module is configured to: report the BSRs of the N eNBs connected to the UE to each eNB connected to the UE; or report the BSRs of less than the N eNBs connected to the UE to each eNB connected to the UE.

11. The UE according to claim 8, wherein the reporting module is configured to report the BSRs in accordance with eNB identifiers, or report the BSRs in accordance with a set report rule,
wherein the eNB identifier comprises: an eNB ID or an eNB index value.

12. An evolved Node B (eNB), comprising: a Buffer Status Report (BSR) acquisition module, a negotiation module and a configuration module,
wherein the BSR acquisition module is configured to receive BSRs sent by a User Equipment (UE) connected to two or more eNBs;
wherein the negotiation module is configured to negotiate a UE capability allocation rule of the UE connected to the two or more eNBs with negotiation modules of other eNBs than the present eNB in accordance with a UE capability range; and
wherein the configuration module is configured to configure the UE, connected to the two or more eNBs, with an uplink licence according to the acquired BSRs and the UE capability allocation rule, and send uplink licence information to the UE.

13. The eNB according to claim 12, wherein
the two or more eNBs comprise N eNBs; and when the BSR acquisition module acquires the BSRs of less than the N eNBs connected to the UE, the BSR acquisition module is further configured to acquire the BSR of each eNB connected to the UE in a request/answer manner or a push manner in conjunction with BSR acquisition modules of the other eNBs than the present eNB.

14. The eNB according to claim 12, wherein the negotiation module is further configured to re-negotiate, a UE capability allocation rule of the UE connected to the eNBs with the negotiation modules of the other eNBs than the present eNB in accordance with the UE capability range, when signal quality of a cell connected to the UE is changed, or load of the cell connected to the UE is changed, or a number of the eNBs in the connected state with the UE is changed.

15. A computer storage medium, in which computer executable instructions are stored to execute the method according to any one of claims 1 to 4.

16. A computer storage medium, in which computer executable instructions are stored to execute the method according to any one of claims 5 to 7.
